# EUROPÄISCHE PATENTSCHRIFT

(11) **EP 0 587 589 B1**
(45) Veröffentlichungstag und Bekanntmachung des Hinweises auf die Patenterteilung: **06.03.1996**
(21) Anmeldenummer: 92909622.0
(22) Anmeldetag: 12.05.1992
(51) Int. Cl.: G05B 15/02

(54) **REGELUNGSANORDNUNG, INSBESONDERE FÜR KRAFTFAHRZEUGE**
REGULATING DEVICE, ESPECIALLY FOR MOTOR VEHICLES
SYSTEME DE REGULATION, EN PARTICULIER POUR VEHICULES AUTOMOBILES

(30) Priorität: 31.05.1991 DE 4117815
(43) Veröffentlichungstag der Anmeldung: 23.03.1994
(73) Patentinhaber: ROBERT BOSCH GMBH, D-70442 Stuttgart (DE)
(72) Erfinder: BITZER, Rainer, D-7252 Weil der Stadt (DE); HAEGELE, Karl-Heinz, D-7143 Vaihingen (DE); DITTMER, Bernd, D-7140 Ludwigsburg (DE); WIEJA, Thomas, D-7412 Eningen (DE); SCHNEIDER, Helmut, D-7075 Mutlangen (DE); SCHWARZ, Franz, D-7143 Vaihingen/Enz (DE)
(86) Internationale Anmeldenummer: DE9200378
(87) Internationale Veröffentlichungsnummer: WO9222022

(56) Entgegenhaltungen:
- DE-A- 3 343 368
- GB-A- 2 125 578
- US-A- 4 371 923
- ELEKTRONIK Bd. 38, Nr. 20, 29. September 1989, MUNCHEN DE Seiten 84 - 91 MANUEL ALBA '" Intelligente" Sensoren im Automobil'
- Messen + Prüfen / Automatik, Juli / August 1983, Seiten 396 bis 418; Prof. Dr-Ing. Dan Teodorescu: "Rechnerunterstützte Proze automatisierung -ein Trend zu intelligenten Unterstationen".

## Beschreibung

### Stand der Technik

Die Erfindung betrifft eine Regelungsanordnung, insbesondere fur Kraftfahrzeuge, mit einem Regelstreckenelement und einer ein Mikrocontroller aufweisenden elektrischen Regelschaltung, die als Komponenten einen Regler (Rechenwerk), eine Istwert-Auswertungsschaltung und eine Programmsteuereinheit mit Speicher aufweist. Der Regler ist vorzugsweise als RISC-Rechenwerksstruktur fur eine digitale Funktionsweise ausgebildet. Als weitere Komponenten sind vorzugsweise eine Leistungsendstufenansteuerung und/oder eine Leistungsendstufe und eine insbesondere genormte µC-Schnittstelle vorgesehen.

In vielen Bereichen der Technik werden Regelungsanordnungen eingesetzt. Oftmals ist die Anwendung von schnellen Regelungsanordnungen erforderlich. Dies gilt auch in der Kraftfahrzeugtechnik, wo Regelungsanordnungen mit Zeitkonstanten < 1 ms eingesetzt werden. Derart kleine Zeitkonstanten sind beispielsweise bei Dämpferventilen in der Fahrwerksregelung notwendig. Hier treten Zeitkonstanten unter anderem von etwa 5 ms auf. Soll eine derartige Regelungsanordnung von dem Mikrocontroller des zentralen Kraftfahrzeug-Steuergeräts mit betrieben werden, so treten aufgrund der begrenzten Rechenkapazität eines derartigen zentralen Mikrocontrollers zeitliche Probleme bei der Bearbeitung auf. Ferner führt die zentrale Lage des Steuergeräts des Kraftfahrzeugs gegenüber der dezentralen Regelungsanordnung zu relativ langen Verbindungsleitungen, die eine hinreichende elektromagnetische Verträglichkeit (EMV) nicht sicherstellen, so daß Störungen zu befürchten sind, die den Regelungsablauf ungewollt beeinflussen können. Desweiteren entsteht erhöhter Aufwand bei der Leitungsführung (Kabelbaum).

Die Entgegenhaltung DE-Messen + Prüfen, Automatik, Juli/August 1983, Seiten 396 bis 418 zeigt und beschreibt einen Prozeßregler (Bild 11 und zugehörige Beschreibung). Dieser Prozeßregler enthält als Funktionseinheiten einen A/D-Wandler, RAM/ROM, eine Zentraleinheit, ein gepuffertes RAM, zwei Schnittstellen und einen Ausgangsblock. Die Funktionseinheiten sind über einen Bus miteinander verbunden. Es ist der Entgegenhaltung aber nicht zu entnehmen, daß die Funktionseinheiten auf einem Chip integriert sind. Eine erfindungsgemäße Istwert-Auswerteschaltung ist ebenfalls nicht in der Entgegenhaltung genannt. Es ist vielmehr ein A/D-Wandler für die Auswertung von Eingangssignalen dargestellt. Dieser weist aber die oben beschriebenen Nachteile auf. Weiterhin ist in dieser Entgegenhaltung keine Endstufen-Ansteuereinheit mit unterlagerter Stromregelung und Schnellfreilauffunktion zur erkennen.

Die Entgegenhaltung D1: Elektronik, Band 38, Nr. 20, 29. Sept. 1989, München, DE, Seiten 85 bis 91 betrifft einen "intelligenten" Sensor. Der "intelligente" Sensor enthält einen eigenen Mikrocontroller. Als Beispiel für einen Mikrocontroller, der in einem "intelligenten" Sensor eingesetzt sein kann, ist in Bild 3 eine Blockschaltung des Mikrocontrollers COP888CF der Firma National Semiconductor dargestellt. Dieser Mikrocontroller enthält auf einem Chip z.B. einen 8 Bit-A/D-Umsetzer, einen Ein-/Ausgabe-Port, einen Watchdog-Schaltkreis, RAM, ROM, verschiedene Zeitgeber, sowie den Rechnerkern. Hinsichtlich der erfindungsgemäßen Istwert-Auswerteschaltung sowie Endstufen-Ansteuereinheit läßt sich dieser Entgegenhaltung jedoch kein Hinweis entnehmen.

### Vorteile der Erfindung

Die erfindungsgemäße Regelungsanordnung mit den im Hauptanspruch genannten Merkmalen hat demgegenüber den Vorteil, daß quasi ein Regler-Peripherie-IC geschaffen ist, das auf einem Substrat die erforderlichen Komponenten aufweist. Die Komponenten können auch als Teil eines digital arbeitenden Mikrocontrollers ausgebildet sein. Dieses Regler-Pheripherie-IC ist bevorzugt als "Elektronik-Vor-Ort-Komponente" hinsichtlich seiner Funktion, Chipfläche und auch seiner Kosten optimiert. Die Integration sämtlicher Komponenten auf einem Chip bei gleichzeitiger Begrenzung der Rechenkapazität auf einen Regelungsalgorithmus stellt eine ökonomische Lösung dar, wobei durch die -im Hinblick auf das Fahrzeug-dezentrale Anordnung (Vor-Ort-Anordnung) des Mikrocontrollers in unmittelbarer Nähe zum Stellglied lange Verbindungsleitungen entfallen, so daß elektromagnetische Störungen, Einkopplungen und Übersprechen verhindert sind.

Bei einer Weiterbildung der Erfindung ist vorgesehen, daß die Regelschaltung einen Daten/Parameterspeicher auf dem Substrat aufweist. In diesem auf dem Chip integrierten Daten/Parameter-Speicher sind unter anderem die Koeffizienten für den Regelalgorithmus gespeichert.

Für den Betrieb des Regelstreckenelements ist eine Endstufe erforderlich, die vorzugsweise mit auf den Chip integriert ist. Auf jeden Fall ist jedoch vorgesehen, daß eine die Endstufe ansteuernde Endstufenansteuereinheit mit auf dem Substrat der Regelschaltung angeordnet wird.

Nach einer Weiterbildung der Erfindung ist vorgesehen, daß die Regelschaltung mindestens eine Schnittstelle für eine Programmeingabe und/oder eine Daten/Parameter-Eingabe und/oder regelungstechnische Sollwert-Vorgabe und/oder eine Status-Eingabe und/oder eine externe Informationsein- und -ausgabe auf dem Substrat aufweist. Diese Schnittstelle kann als Bus-Schnittstelle (Mikrocontroller-Bus, CAN) ausgebildet sein.

Vorzugsweise ist eine digitale Form der Implementierung eines Regelalgorithmus vorgesehen. Dies schließt Störungen im Regler aus.

Für eine besonders ökonomische Ausgestaltung ist vorgesehen, daß die Komponenten auf dem Chip der Regelungsschaltung flächen- und im Hinblick auf regelungstechnische Anforderungen optimiert/spezialisiert ausgebildet sind. Es wird also im Gegensatz zu dem aus dem Stand der Technik bekannten Steuergerät nicht ein Mikrocontroller mit großer Kapazität und komplexer Ausbildung zum Einsatz gebracht, sondern ein für die Regelungsaufgaben optimierter Regler-Peripherie-IC mit einem auf die Belange der digitalen Regelungstechnik abgestimmten minimalen Befehlssatz vorgesehen.

Für eine große Flexibilität ist es vorteilhaft, daß der Daten/Parameter-Speicher als RAM ausgebildet ist. Sofern jedoch die Parameter und Regelungskriterien -insbesondere bei einer Serienproduktionfeststehen, kann für eine Kostenoptimierung auch vorgesehen sein, daß der Daten/Parameter-Speicher als ROM ausgebildet ist.

Die vorstehend bereits genannte Schnittstelle kann vorzugsweise als CAN-Schnittstelle ausgebildet sein. Über eine CAN-Verbindung kann daher ein Datenaustausch mit anderen Komponenten des Gesamtsystems, zum Beispiel mit anderen elektrischen/elektronischen Komponenten des Kraftfahrzeugs, wie zum Beispiel dem zentralen Steuergerät, vorgesehen sein.

Alternativ ist es jedoch auch möglich, daß die Schnittstelle als Mikroprozessor-Schnittstelle, insbesondere Mikroprozessor-Parallelschnittstelle, ausgebildet ist. Über diese Schnittstelle können Programme, Parameter, Statusinformationen und regelungstechnische Systemgrößen geladen beziehungsweise abgefragt werden. Ferner eignet sich diese Schnittstelle für einen Chiptest beziehungsweise eine Diagnose.

Insbesondere bei Anwendungen außerhalb der KFZ-Technik ist es auch möglich, Schnittstellen fur die Anbindung an Industrie-Bussysteme vorzusehen.

Die Gesamtstruktur des zuvor beschriebenen Regler-Peripherie-IC's könnte auch als zuätzliche On-Chip-Peripherie-Einheit auf einem komplexeren µC/µP (Micro-Controller/Micro-Prozessor) integriert werden.

### Zeichnung

Die Erfindung wird anhand einer Figur näher erläutert. Diese zeigt ein Elockschaltbild der Regelungsanordnung.

### Beschreibung des Ausführungsbeispiels

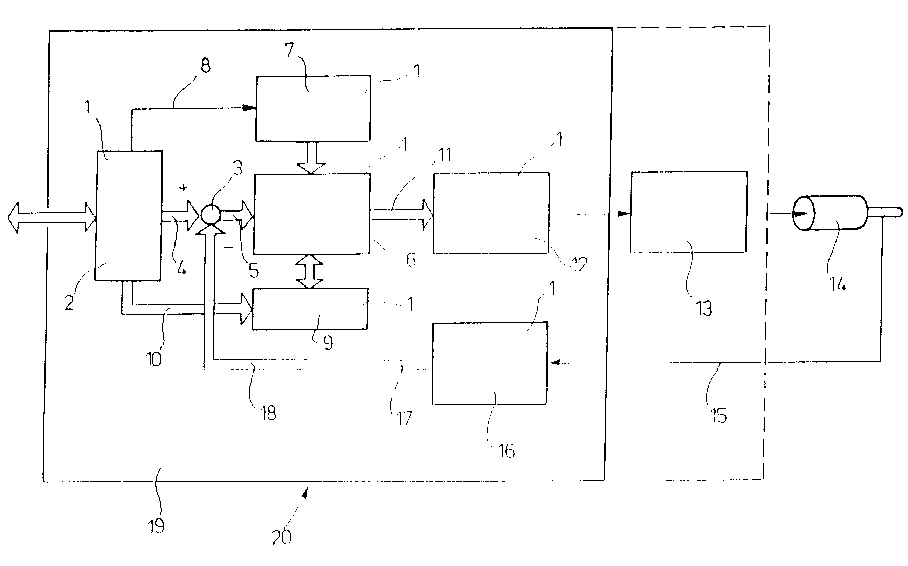

Die Figur 1 zeigt ein Blockschaltbild einer Regelungsanordnung mit mehreren Komponenten 1. Bei den Komponenten 1 handelt es sich um eine Schnittstelle 2, die zu einer Summationsstelle 3 einen Sollwert 4 liefert. Der Ausgang 5 der Summationsstelle 3 ist an einen als Rechenwerk ausgebildeten Regler 6 angeschlossen. Der Regler 6 ist an eine Programmsteuereinheit 7 angeschlossen, die einen nicht näher dargestellten Speicher aufweist. Ferner besteht eine Verbindung 8 zwischen der Schnittstelle 2 und der Programmsteuereinheit 7, um beispielsweise zur Schnittstelle 2 gelieferte Informationen zur Programmsteuereinheit 7, beispielsweise zur Beeinflussung des Regelungsablaufs, zu übertragen.

Ferner ist dem Regler 6 ein Daten/Parameter-Speicher 9 zugeordnet. Der Daten/Parameter-Speicher 9 steht auch mit der Schnittstelle 2 über eine Informationsstrecke 10 in Verbindung. Hierdurch ist es möglich, daß zum Beispiel externe Daten zur Vorgabe beziehungsweise Veränderung von Parametern des Regelalgorithmus' zuzuleiten.

Der Ausgang 11 des Reglers 6 ist an eine Endstufen-ansteuereinheit 12 angeschlossen. Diese wiedrum steht mit einer Endstufe 13 in Verbindung, die vorzugsweise mit Leistungshalbleitern bestückt ist. Die Endstufe 13 arbeitet mit einem Regelstreckenelement 14 zusammen. Das Regelstreckenelement 14 liefert -vorzugsweise mittels eines nicht dargestellten Sensors- einen Sensorwert 15, der einer Istwert-Auswerteschaltung 16 zugeführt wird. Am Ausgang 17 der Istwert-Auswerteschaltung 16 steht ein Istwert 18 zur Verfügung, der -mit negativem Vorzeichen- der Summationsstelle 3 zugeleitet wird.

Erfindungsgemäß ist vorgesehen, daß samtliche Komponenten 1 auf einem Substrat 19 eines Mikrocontrollers 20 oder auf einem separaten Substrat integriert sind. Dies ist in der Figur durch die durchgezogene Umrahmung angedeutet. Alternativ ist es jedoch auch möglich, daß darüber hinaus auch noch die Endstufe 13 mit auf dem Substrat 19 integriert ist; dies ist durch die gestrichelte Linie der Figur gezeigt.

Das das Substrat 19 aufweisende Regler-Peripherie-IC arbeitet vorzugsweise digital. Dies bedeutet, daß sämtliche Komponenten 1 digital realisiert sind und sich auf dem Chip befinden. Eine rein digitale Lösung ist nicht zwingend notwendig, jedoch von großem Vorteil hinsichtlich der Integrierbarkeit und des zu verwendenden Halbleiterprozesses. Der vom Sensor 15 gelieferte Sensorwert wird nicht -wie im Stand der Technik- über einen Analog/Digital-Wandler dem System zugeführt, sondern mittels geeigneter, dem Fachmann bekannter Grundelemente direkt als Digitalwert gewonnen. Die Istwert-Auswerteschaltung 16 ist vorzugsweise für die Zusammenarbeit mit Wirbelstromsensoren ausgelegt, prinzipiell jedoch auch für andere frequenzproportionale Auswerteverfahren konzipiert.

Der digitale Regler 6 ist in Form eines flächenoptimierten und problemorientierten Rechenwerks realisiert, wobei der gesamte Befehlssatz für die regelungstechnischen Algorithmen auf die notwendigen Befehle der digitalen Regelungsstrukturen optimiert ist. Dies führt zu einer kostengünstigen Ausbildung. Es ist dabei möglich, den Befehlssatz, also das Rechenwerk, frei programmierbar in bezug auf den Regelalgorithmus und die Koeffizienten vorzusehen. Hierzu wird ein RAM eingesetzt. Für eine alternative und kostengünstigere Lösung ist es jedoch auch möglich, daß anstelle des RAM ein ROM eingesetzt wird, wodurch sich die Chipfläche verkleinern läßt.

Die Endstufe 13 arbeitet pulsweitenmoduliert mit konstanter Frequenz und vorzugsweise mit einer unterlagerten Stromregelung. Den als Transistoren ausgebildeten Leistungshalbleitern sind Freilaufdioden zugeordnet. Vorzugsweise ist ein elektronisch schaltbarer Schnell freilauf vorgesehen. Das Schaltkriterium für den Schnellfreilauf wird durch den programmierbaren Regelalgorithmus bestimmt. Damit ist der Schnellfreilauf also ein Teil der jeweils verwendeten Regelstrategie.

Die Schnittstelle 2 ist bevorzugt als CAN-Schnittstelle ausgebildet. Sie kann jedoch alternativ auch als Mikroprozessor-Schnittstelle realisiert sein. Von außen her -beispielsweise von anderen Komponenten des Kraftfahrzeugs- können zur Schnittstelle Informationen übertragen werden, die den Regelalgorithmus beeinflussen. Beispielsweise können Programme, Parameter, Statusinformationen und regelungstechnische Systemgrößen geladen beziehungsweise abgefragt werden. Ferner erlaubt die Schnittstelle einen Chiptest beziehungsweise eine Chip-Diagnose, wobei auf den einzelnen Funktionsblöcken des Regler-Peripherie-IC's Diagnose-Funktionen mit implementiert sind.

Insgesamt ist festzustellen, daß die erfindungsgemäße Regelungsanordnung aufgrund ihres rein digitalen Schaltungsaufbaus eine Strukturverkleinerung und damit eine Verkleinerung der Chipfläche ermöglicht. Aufgrund des auf regelungstechnische Aufgabenstellungen optimierten Befehlssatzes ergibt sich eine minimale kostenorientierte Ausbildung. Vorzugsweise ist ferner vorgesehen, daß eine zentrale Taktsignalerzeugung auf dem Chip erfolgt, was zur Unterstützung der zeitlichen Synchronisation von Abtasttakt der Istwert-Auswerteschaltung, dem Rechenzyklus des Reglers 6 und der Grundfrequenz der Endstufe 13 führt.

## Patentansprüche

1. Regelungsanordnung, insbesondere für Kraftfahrzeuge, mit einem Stellglied, wobei die Stellwerte für das Stellglied mittels einer digitalen Regelschaltung, der einerseits ein Sollwert und andererseits ein Istwert zugeführt ist, erzeugt werden, mit einer Istwert-Auswerteschaltung, mit einem Daten/Parameter-Speicher, mit einer Schnittstelle, mit einer Programmsteuereinheit, mit einer Endstufenansteuereinheit für eine Endstufe, dadurch gekennzeichnet, daß die Istwert-Auswerteschaltung (16) als rein digitale Istwert-Auswerteschaltung (16) zur Auswertung frequenzproportionaler Sensorsignale ausgebildet ist, daß die Endstufe (13) mit einer unterlagerten Stromregelung arbeitet, daß für die Endstufe (13) ein elektronisch schaltbarer Schnellfreilauf vorgesehen ist, daß die Komponenten (1), nämlich Istwert-Auswerteschaltung (16), Endstufenansteuereinheit (12), Schnittstelle (2), Daten/Parameter-Speicher (9), Rechenwerk (6) und Programmsteuereinheit (7) auf einem Chip integriert sind.

2. Regelungsanordnung nach Anspruch 1, dadurch gekennzeichnet, daß die Komponenten (1) auf dem Substrat (19) flächen- und im Hinblick auf regelungstechnische Anforderungen optimiert/spezialisiert ausgebildet sind, wobei das Rechenwerk (6) eine RISC-Rechenwerkstruktur mit einem auf die notwendigen Befehle für die digitale Realisierung des Regelvorgangs beschränkten Befehlssatz aufweist.

3. Regelungsanordnung nach Anspruch 1 oder 2, dadurch gekennzeichnet, daß die einzelnen Komponenten (1) jeweils mit einer Diagnosefunktion für eine Überwachung der Regelschaltung (20) und des Stellgliedes (14) versehen sind.

4. Regelungsanordnung nach einem der vorhergehenden Ansprüche, dadurch gekennzeichnet, daß eine zentrale Taktsignalerzeugung für alle Komponenten (1) zum synchronen Arbeiten im Sinne eines Abtastsystems vorhanden ist.

5. Regelungsanordnung nach einem der vorhergehenden Ansprüche, dadurch gekennzeichnet, daß die Regelschaltung (20) nur mit einem Regelstreckenelement (14) zusammenwirkt.

6. Regelungsanordnung nach einem der vorhergehenden Ansprüche, dadurch gekennzeichnet, daß das Chip im Bereich des Stellgliedes (14) angebracht ist.

7. Regelungsanordnung nach einem der vorhergehenden Ansprüche, dadurch gekennzeichnet, daß der Daten/Parameter-Speicher (9) als RAM ausgebildet ist.

8. Regelungsanordnung nach einem der Ansprüche 1 bis 6, dadurch gekennzeichnet, daß der Daten/Parameter-Speicher (9) als ROM ausgebildet ist.

9. Regelungsanordnung nach einem der vorhergehenden Ansprüche, dadurch gekennzeichnet, daß die Schnittstelle (2) als serielle Schnittstelle für einen CAN-Bus ausgebildet ist.

10. Regelungsanordnung nach einem der Ansprüche 1 bis 8, dadurch gekennzeichnet, daß die Schnittstelle (2) als parallele Schnittstelle ausgebildet ist.

## Claims

1. Control system, in particular for motor vehicles, having an actuator, the control values for the actuator being generated by means of a digital control circuit which is fed on the one hand with a set value and on the other hand with an actual value, having an actual value evaluation circuit, having a data/parameter memory, having an interface, having a program control unit, having an output stage drive unit for an output stage, characterized in that the actual value evaluation circuit (16) is constructed as a purely digital actual value evaluation circuit (16) for evaluating frequency-proportional sensor signals, in that the output stage (13) operates with a secondary current control, in that an electronically switchable fast freewheeling means is provided for the output stage (13), in that the components (1), namely actual value evaluation circuit (16), output stage drive unit (12), interface (2), data/ parameter memory (9), arithmetic-logic unit (6) and program control unit (7) are integrated on a chip.

2. Control system according to Claim 1, characterized in that the components (1) on the substrate (19) are constructed so as to be optimized/specialized in terms of area and with respect to technical control requirements, the arithmetic-logic unit (6) having a RISC arithmetic-logic unit structure with an instruction set which is limited to the instructions necessary for the digital realization of the control process.

3. Control system according to Claim 1 or 2, characterized in that the individual components (1) are each provided with a diagnostic function for monitoring the control circuit (20) and the actuator (14).

4. Control system according to one of the preceding claims, characterized in that a central clock signal generation for all the components (1) for synchronous operation in the manner of a sampling system is provided.

5. Control system according to one of the preceding claims, characterized in that the control circuit (20) only interacts with a directly controlled element (14).

6. Control system according to one of the preceding claims, characterized in that the chip is mounted in the region of the actuator (14).

7. Control system according to one of the preceding claims, characterized in that the data/parameter memory (9) is constructed as a RAM.

8. Control system according to one of Claims 1 to 6, characterized in that the data/parameter memory (9) is constructed as a ROM.

9. Control system according to one of the preceding claims, characterized in that the interface (2) is constructed as a serial interface for a CAN bus.

10. Control system according to one of Claims 1 to 8, characterized in that the interface (2) is constructed as a parallel interface.

## Revendications

1. Système de régulation notamment pour véhicule automobile comportant un organe de réglage, les valeurs de réglage destinées à l'organe de réglage étant générées par un circuit de régulation numérique recevant d'une part une valeur de consigne et d'autre part une valeur réelle, un circuit d'exploitation de valeur réelle, une mémoire de données/paramètres, une interface, une unité de commande de programme, une unité de commande de l'étage de sortie pour commander l'étage de puissance, caractérisé en ce que le circuit d'exploitation de valeur réelle (16) est réalisé sous la forme d'un circuit d'exploitation de valeur réelle (19) purement numérique, pour exploiter des signaux de capteur proportionnels à la fréquence, l'étage de puissance (13) coopérant avec une régulation de courant, commandée, et pour l'étage de sortie (13) il est prévu un circuit en roue libre commutable par le moyen électronique, les composants (1) à savoir le circuit de valeur réelle (16), l'unité de commande de l'étage de sortie (12), l'interface (2), la mémoire de données/paramètres (9), le moyen de calcul (6) et l'unité de commande de programme (7) sont intégrés sur un chip.

2. Système de régulation selon la revendication 1, caractérisé en ce que les composants (1) sont optimisés/spécialisés sur le substrat (19), en fonction des exigences de surface et de technique de régulation, le moyen de calcul (6) ayant une structure de moyen de calcul RISC avec un jeu de commandes limité aux commandes nécessaires pour la réalisation numérique de la phase de régulation.

3. Système de régulation selon la revendication 1 ou 2, caractérisé en ce que les différents composants (1) sont munis chaque fois d'une fonction de diagnostic pour surveiller le circuit de régulation (20) et l'organe de réglage (14).

4. Système de régulation selon l'une des revendications précédentes, caractérisé par une génération centrale du signal d'horloge pour tous les composants (1), pour travailler en synchronisme dans le sens d'un système de détection.

5. Système de régulation selon l'une quelconque des revendications précédentes, caractérisé en ce que le circuit de régulation (20) coopère seulement avec un élément de chemin de régulation (14).

6. Système de régulation selon l'une quelconque des revendications précédentes, caractérisé en ce que le chip est monté par exemple au niveau de l'organe de régulation (14).

7. Système de régulation selon une quelconque des revendications précédentes, caractérisé en ce que la mémoire de données/paramètres (9) et en forme de mémoire RAM.

8. Système de régulation selon l'une des revendications 1 à 6, caractérisé en ce que la mémoire de données/paramètres (9) est une mémoire ROM.

9. Système de régulation selon l'une des revendications précédentes, caractérisé en ce que l'interface (2) est une interface de type série pour un bus CAN.

10. Système de régulation selon l'une quelconque des revendications 1 à 8, caractérisé en ce que l'interface (2) est une interface parallèle.
